# EUROPEAN PATENT APPLICATION

(11) **EP 0 578 457 A2**
(43) Date of publication of application: **12.01.1994**
(21) Application number: 93305227.6
(22) Date of filing: 02.07.1993
(51) Int. Cl.: G06K 17/00, G06K 7/00, G06K 19/073

(54) **A data communication system**

(30) Priority: 06.07.1992 GB 9214308
(71) Applicant: PLESSEY SEMICONDUCTORS LIMITED, Swindon, Wiltshire SN2 2QW (GB)
(72) Inventor: Kitchin, Vaughan Neil, Dr., Ingham, Lincoln LN1 2YW (GB)
(74) Representative: Cockayne, Gillian

(57) **Abstract**

A data communication system utilises a plurality of tags which are capable of communicating with one or more base stations for the exchange of information between them. Each tag includes an interface chip which may be arranged to interact with an on-board micro-processor and/or additional memory to give greater flexibility of operation. The interface chip permits different communication protocols to be utilised and is suitable for different applications by setting it appropriately eg. by programming it prior to use or by sending appropriate control data from a base station. In one aspect of the invention, the chip stores the identification code of the base with which it is currently communicating in a two stage register 15 which also stores the identification code of the previous base station with which it was in contact. The chip may also allow the receiver 9 to be switched off for a variable period to reduce power requirements. The delay may be set by a control signal from the base station.

## Description

This invention relates to data communication systems and more particularly to systems which employ a base station and at least one tag capable of making data available to the base station, typically, but not necessarily, in response to interrogation from the base station.

In its simplest implementation, a tagging system includes a single base station and a tag, which is normally mobile, and information is exchanged between the base station and tag which can be used to determine the status of a system. In some systems one or more base stations may also be mobile. Usually a plurality of tags are employed and there may be a number of base stations distributed at different locations. Tagging systems have been advantageously used in security arrangements for example. In one such arrangement, each person carries a tag which bears an identification code. A base station is positioned at each door to restricted areas in a building and includes a reader which is capable of interrogating a security tag presented to it. If the correct coding is carried by the tag, the base station allows the door to open.

Other uses for tagging systems include identifying and tracking goods included in containers as they are shipped around a warehouse and arrangements in which vehicles are identified to enable tolls to be collected.

The tags may be passive transponders which reflect microwave energy, for example, transmitted by a base station. Information is transmitted to the base station by modulation imposed on the returned energy which is then detected at the base station. More complex tagging systems are available in which the tags also include active transmitters, permitting communication to be established over greater distances and giving increased capacity in the amount of information which a tag is able to return to a base station in response to an interrogation signal.

In current tagging systems, each system is designed for a specific purpose. Many different arrangements which are mutually incompatible are available for use in similar applications.

The present invention seeks to provide a data communication system utilising tags which is of wider applicability and offers enhanced flexibility compared to systems previously available.

According to a first aspect of the invention, a data communication system comprises a base station and at least one tag capable of making data available to the base station, the tag including a data processing circuit which is adjustable to enable different protocols for communication with the base station and/or data handling functions to be selected.

By the employing the invention, the same data processing circuit may be used in systems intended for use in different applications requiring different information to be transmitted between the base station and tag or tags, and having different processing capability on-board the tag. This reduces costs in implementing a system in accordance with the invention compared to previous systems as it is not necessary to completely re-design tag circuitry each time a new system is contemplated. The invention thus provides a designer with a powerful tool allowing him many options. For example, the data processing circuit may include means for varying the rate at which data is exchanged between a base station and a tag or for changing the information word length.

Tags including a data processing circuit may be used in conjunction with existing base stations in a previously designed system to replace tags having dedicated circuitry where it is wished to extend the system capabilities by incorporating additional features. Different systems can be made to be mutually compatible by employing the invention. In particular it enables a unified protocol to be adopted for existing systems to permit interconnection between them.

The tag may be arranged to include provision only for transmitting data to the base station, for example at fixed intervals or when the data held by the tag changes. Alternatively, and preferably, the tag also includes receiver means capable of receiving an interrogation signal and in response making data available to the base station. The data may be transmitted by the tag as a simple tone response, for example, or by modulation of the received signal. The received and/or transmitted signals may consist only of the tag identification (ID) code or may be a more complex interchange of information involving both further data and ID code transfer between the tag and base station.

Preferably, the data processing circuit is in the form of an integrated circuit. By manufacturing the data processing circuit as a chip it may be conveniently produced in large numbers and then distributed for assembly onto tags used in different systems.

The data processing circuit may be such that it is capable of operating substantially alone, or in combination with additional memory, or in combination with a micro-processor or application specific integrated circuit (ASIC), depending on the settings made to the circuit.

The tag is preferably adjustable by selection means set during operation of the tag, in which case this may conveniently be carried out by control signals transmitted to the tag from a base station. This adjustment may be carried out at each communication between a base station and a tag, enabling data exchange to be established between base stations operating with different communication protocols. Alternatively, or in addition, the circuit may be adjusted by selection means set prior to the tag entering operational use. Thus, when the processing circuit is installed, particular instructions may be stored in memory included in the data processing circuit.

In one preferred embodiment of the invention, the tag includes an identification code which includes both a group code and a code which is specific to the tag. The base station then addresses a tag or tags using group codes whereby those within a particular group are brought into communication with it. This capability of "group calling" may be included in the data processing circuit so that it could be available to any tag in which the circuit is installed.

According to a second aspect of the invention, a data communication system comprises a base station and at least one tag capable of making data available to the base station, the tag including means for storing information identifying the base station and a previous base station with which it has been in communication.

A system in accordance with the second aspect of the invention enables information to be derived regarding a route which has been followed by a tag. This is particularly useful for toll charging applications. In such a system, a base station may be located at each entrance and exit to a toll route. As a vehicle joins a toll route, its tag is interrogated by the base station on the entry road or the base station receives a periodic transmission from the tag without the need to send an interrogation signal. Communication is established between the tag and the base station and the base station code is stored on the tag. When the vehicle reaches the toll charging point, or leaves the toll route, the next base station acquires information from the tag identifying the previous base station which the vehicle has passed. This can then be used in setting an appropriate toll charge.

This aspect of the invention is also advantageously used for monitoring the movement of cargo containers over State or country boundaries. A tag may be fixed to the container such that it can be tracked independently of any vehicle by which it is carried. If the tag includes sufficient memory, the ID of each base station which is passed may be stored on the tag to enable the entire route taken by the container to be tracked. Such a facility would be difficult to implement by means other than the present invention because of the different communication protocol standards imposed by neighbouring countries or regions, if indeed particular standards exist.

According to a third aspect of the invention, a data communication system comprises a base station and at least one tag capable of making data available to the base station, the tag including a receiver and including means for making the receiver non-receptive for a time period after receipt of data from the base station.

By employing this aspect of the invention, a tagging system may reduce its power requirements during periods when communication between a tag and the base station is not taking place. When a tag receives an interrogating message, say, from a base station, it may then power down the receiver for a period during which it is known that no message will transmitted by the base station. This time period may be fixed and set according to the requirements of a particular tagging system or may be variable and set by each transmission from each base station.

Some ways in which the invention may be performed are now described by way of example with reference to the accompanying drawings in which:
Figure 1 schematically illustrates a tagging system in accordance with the invention;
Figure 2 is a schematic block diagram of a tag including a data processing circuit in accordance with the invention;
Figure 3 illustrates a modified version of the tag illustrated in Figure 2 in accordance with the invention; and
Figure 4 is a schematic diagram illustrating in functional terms a tag used in another data communication system in accordance with the invention.

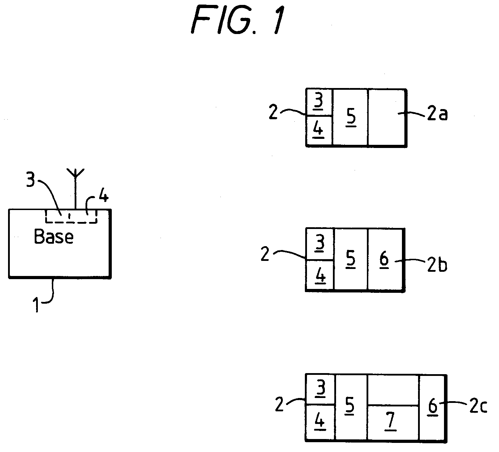

With reference to Figure 1, one data communication system in accordance with the invention comprises a plurality of base stations, one of which 1 is shown, which are capable of interacting with a plurality of portable tags illustrated generally at 2. The base stations 1 and tags 2 each include RF and/or microwave transmitters 3 and receivers 4 for the interchange of data and each also includes a data processing circuit 5 in accordance with the invention. The data processing circuit 5 is also referred to in this specification as an interface chip as it permits an interface to be established with the base stations of the system and in this case it is implemented as an integrated device. Although in the example described, the interface device 5 is considered to be separate from the receiver 4 and transmitter 3, in other arrangements in accordance with the invention, they form part of the interface device. The various components may be separately provided on-board the tag or may be fabricated as an integrated circuit.

Depending on the complexity of the system and the processing capability required, the tag 2a may take a simple form in which the interface chip 5 is combined with the transmitter 3 and receiver 4 with no additional memory or processing capability. For other applications, in addition to those components included in the tag 2a, a tag 2b also includes additional memory 6. In an alternative configuration, tag 2c may also carry a micro-processor 7 or ASIC with which the interface chip 5 is capable of interacting and this may also carry additional memory if required. Each of these options is available using the same chip 5 and adjusting its settings appropriately, the option chosen depending on the requirements of the system as a whole.

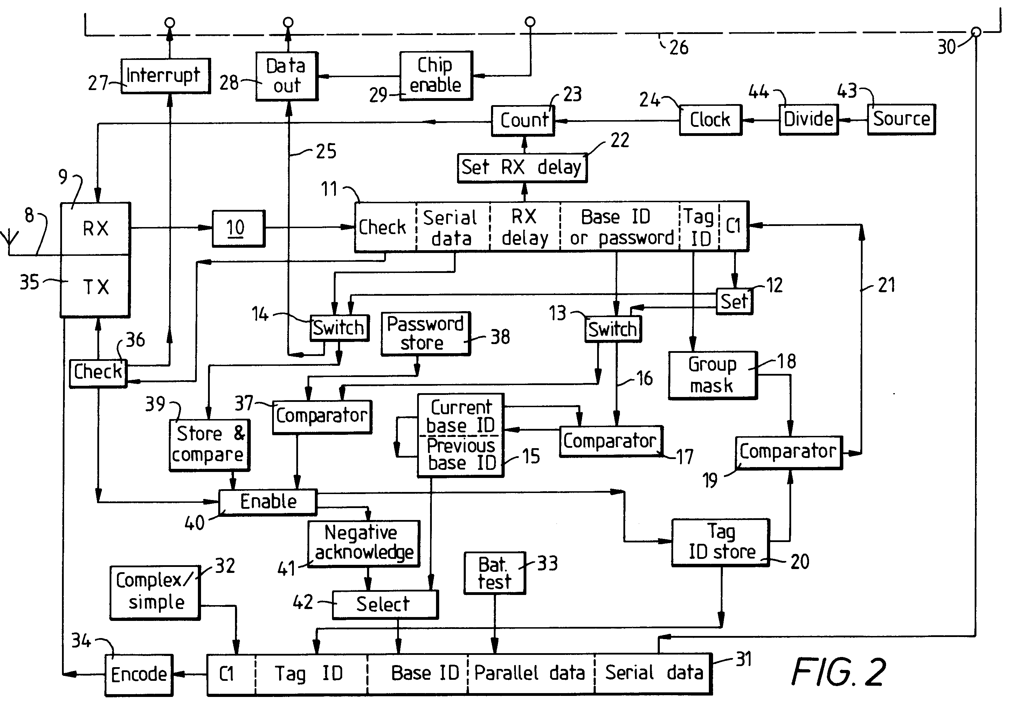

Figure 2 is a schematic block diagram of a tag which incorporates an interface chip, additional memory and a micro-processor. As described, a micro-processor is included but it should be understood that this could be replaced by an ASIC, the arrangements described hereinafter also being capable of implementation with an ASIC.

With reference to Figure 2, the tag receives incoming data modulated on an RF signal from an associated base station included in the data communication system. The data is received at an antenna 8 connected to a receive and transmit chip 9 and is passed via a decoder 10 to a register 11 within which the data is stored. The received data word includes several components which are shown as occupying portions of the register 11. The data includes a control bit C1 which can be set high or low, followed by data relating to the identification code Tag ID of the tag to which the data message is addressed. This is then followed by a portion containing either the identification code Base ID of the base station sending the data or a password which relates to the password of the tag for which the message is intended. The remainder of the data word includes a time delay which controls the period of time for which the receiver is made non-receptive and serial data which is to be transmitted to the micro-processor. Alternatively the serial data part of the data word may be occupied by a new tag identification code when it is wished to change the one currently stored. Finally, the data word includes check digits used with an appropriate checking algorithm to verify the accuracy of the received data.

The control bit C1 is applied to a switch control unit 12 which applies control signals to two switches 13 and 14, each switch transmitting data sent via it to one of two output paths. The control bit C1 identifies whether the data word held in the register 11 includes the base identification code or a password, the latter being required for re-setting the tag ID code.

Where the base ID code is transmitted by the base station as part of the data word, control bit C1 causes the control unit 12 to set the switch 13 so as to enable the base ID code applied to it to be stored in a two stage register 15 if it differs from that previously held in the register 15 as the "current" base ID. The two stage register 15 enables the ID code of the previous and current base stations from which a data word has been received to be held. The output of the switch 13 is transmitted via line 16 to a comparator 17 where the base ID included in the received data word is compared to the "current" base ID held in register 15. If the two match then the data held within the register 15 is retained unchanged. However, if the base ID code included in the data word differs from the "current" base ID code held in the register 15, the stored "current" base ID code is transferred to the "previous" base ID code part of the register. The new ID code is transmitted via comparator 17 to the first stage of the register 15 to replace it. Thus, the tag always has available information regarding the present base and previous base with which data communication has been established.

The received data word includes a portion representing the tag ID code. This is set by the base station to represent either a unique identification code which is associated with one tag only or to send a "group" code which identifies a plurality of tags falling within a particular group ID code. This facility may be useful, for example, once contact has been made between a base station and a tag by using a group code. The next data word may then use the tag ID code to specifically address that tag. Where group calling is required, the tag ID code includes digits identifying the group and those digits which would have been occupied by a unique tag ID code are designated as being non-significant.

The received tag ID code is applied to an ID masking circuit 18 which transmits it to a comparator 19. If a group ID sequence is included, the circuit 18 designates other parts of the code as non-significant such that these are not included in the comparison process. The comparator 19 also receives an input from a store 20 which stores the entire ID code of the tag. Where the "group call" coding is present, those parts of the received code specified by the masking circuit 18 as being significant are compared with the corresponding parts of the tag ID code stored at 20. Where a match is found then the processing on the interface chip is allowed to continue. If there is no match, a signal is then applied on line 21 to the register 11 to cause the stored data word to be dumped from it and no further processing takes place.

Where the tag ID code included in the received data word does not include a "group call" coding, then all the digits of the received ID code are designated by the masking circuit 18 as being significant. All digits of the received code are compared at 19 with the entire tag ID code from store 20. Again, if there is a match between the received ID code and that held in the store 20 then processing is permitted to continue.

The received data word includes a portion containing information setting a time period from the time of receipt of the data word for which the receiver is turned off, hence reducing power requirements. The receiver shut-down period is variable and is set by the base station such that the receiver is made active when further data is to be transmitted to the tag. The data relating to the receiver delay setting is transmitted to a delay unit 22 which sets and starts a counter 23. The counter 23 receivers an input from the tag clock 24 and counts a set number of cycles before enabling the receiver 8 again, the receiver 8 being turned off on commencement of the count and being powered up again when the count is completed.

The data word includes 64 bits of serial data which are transmitted via the switch 14 and one of its output lines 25 to a micro-processor 26. The interface chip includes an interrupt pin 27 which permits connection with the micro-processor 26. At the end of the receive cycle when the data word is complete and stored in the register 11 and after the data has been checked for correctness, irrespective of the result of the checking, the interrupt pin 27 is made to go low. This indicates to the micro-processor 26 that data is available on the serial data out pin 28 of the interface chip. The micro-processor 26 then accesses the data from pin 28 using its chip enable pin 29 to initiate transmission of the data to the micro-processor 26. The micro-processor clock governs the data exchange rate as serial data is transmitted via pin 28 to the micro-processor 26. Serial data is transmitted in response from the micro-processor 26 to the chip via a connection 30. The 64 bits of serial data is applied to an output data word register 31 where it is stored prior to encoding and transmission to the interrogating base station. The data word for transmission held within the output register 31 includes a control digit C1 which is set high or low depending on whether the interface chip is operating in a complex mode, that is with access to a micro-processor, or in a simple mode. In this embodiment, the control digit therefore indicates that the operational mode is complex. This bit C1 is derived from a store 32 which is set externally when the chip is first programmed. The output register 31 includes the tag ID code derived from tag ID store 20 and the previous base ID code from the two stage register 15. The transmitted data word also includes parallel data followed by the serial data from the micro-processor 26. Part of the parallel data includes the results of a battery test carried out by a test circuit 33. If the battery state is low, it causes an LED to be illuminated to give a visual indication of this for users of the tag and/or at the base station. Other information included in the parallel data may relate to, for example, intruder alerts if the system is used in a security arrangement, the type of information available being dependent on the particular usage of the data communication system. There is considerable flexibility available to an operator in the kind and amount of data transferred between the tag and base station. The transmitted word is encoded at 34 and transmitted by the transmitter 35.

The check digits included in the received data word from the base station are transmitted to calculator 36 which on receipt sends a warm up signal to the transmitter 35. The calculator applies an algorithm to the check data to ensure the data word has been received in an uncorrupted form. After carrying out the check, a control signal is sent to the interrupt pin 27. Where additional memory is included, as in the embodiment shown in Figure 2, the check algorithm may be complex and include scope for correction of incorrectly received data.

If it is wished to change the tag ID, the data word sent by the base station includes a password in place of the base ID code and the new ID code is transmitted twice in the slot otherwise occupied by serial data intended for the micro-processor 26. The control digit C1 is set to indicate that the ID code is to be changed. This causes the switch setting circuit 12 to change switches 13 and 14. The password is transmitted via switch 13 to a comparator 37 where it is compared with the stored password 38 programmed in the chip after manufacture. The two sendings of the new ID code are transmitted via the switch 14 to a store and comparator 39 where the two transmissions of the new ID code are compared for exact match. Only if an exact match is found can a new ID code be applied to the tag. The outputs of the comparator 37 and the store and comparator 39 are applied to an enabling gate 40 which also receives the output from the calculator of the check digits 36. If the comparison 37 shows a match between the transmitted and stored passwords, that there is also a match between the ID codes sent in the serial data slot and that furthermore the calculation of the check digits shows that there is no corrupted data, then the enabling gate 40 allows the ID code stored in store 39 to be applied to the tag ID store 20 to replace the old tag ID. The new tag ID is applied to the transmitted data word as an indication to the base station that the new tag ID has been successfully installed. However, if there is no match of either the password or the two transmissions of the ID code, or if the calculation shows there to be a fault, then the enable gate 40 does not permit the new ID code to be input into store 20. A signal indicative of the failure to change the tag ID code is applied to a store 41 holding a negative acknowledgment code. This code is transmitted via a select gate 42 which also receives the previous base ID information from the two stage register 15. If there is an output from the code store 41, this overrides the inclusion of the previous base ID code in the transmitted data word, alerting the base station to the failure to change the tag ID code.

The interface chip also includes means for modifying the rate at which the tag receives and transmits data. This enables the interface chip to be used in a wide range of applications over different communication channels.

The data clock signal for the chip is derived from a high frequency source which in this case is a quartz crystal 43, but which could be for example, a ceramic resonator. The output of the high frequency source 43 is passed via a programmable divider 44 to the data clock 24. The division ratio of the divider 44 is variable, hence altering the frequency of the data clock 24. In simple tag configurations, the division ratio is fixed at 1 and the data rate can only be changed by changing the high frequency source. However, in the embodiment illustrated in Figure 2, the divider 44 includes a programmable divider which is set up after manufacture to determine the data rate.

The tag illustrated in Figure 2 operates in a complex mode enabling data transmission to and from an on-board micro-processor to be implemented. The availability of processing capability in addition to that available from the interface chip enables the tag to be programmed for use in a wide variety of applications. For example, the tag may be used in the transportation of goods in which a vehicle identified by the tag ID code carries loads which are loaded or unloaded in whole or in part at different transfer points. These changes in the goods carried by the vehicle may be up-dated and stored in the micro-processor (or ASIC where this is included in place of the micro-processor) via a base station located at a transfer point. This data is then available to other base stations which the vehicle encounters during its journey. The base stations may be independent of one another or may be connected to a central control station to which information received from tags is transmitted and collated.

The tag shown in Figure 2 may be modified by the omission of the micro-processor 26 in which case, the settings of the interface chip are adjusted to take this into account. The complex/simple operation unit 32 is set so as to indicate by the control digit C1 included in the transmitted data word from the tag that the tag is operating in simple mode. In addition, the interrupt pin 27 and serial data in pin 28 are tied low and the connection 30 is not made. In this embodiment of the invention there is no transmission or reception of serial data as this relates solely to data exchange between the interface chip and an on-board micro-processor or ASIC. However, the portion of the register 11 in which serial data would be held is still available. If it is wished to change the tag ID, the serial data slot in the register 11 is occupied by two transmissions of the new tag ID code which is installed in the way described above when the interface chip is arranged to operate in a complex mode.

The remaining functions of the tag, which include the group calling facility, the ability to store the previous base ID code in addition to the current base ID code and the receiver disable function, operate in the same way as described with reference to the tag illustrated in Figure 2.

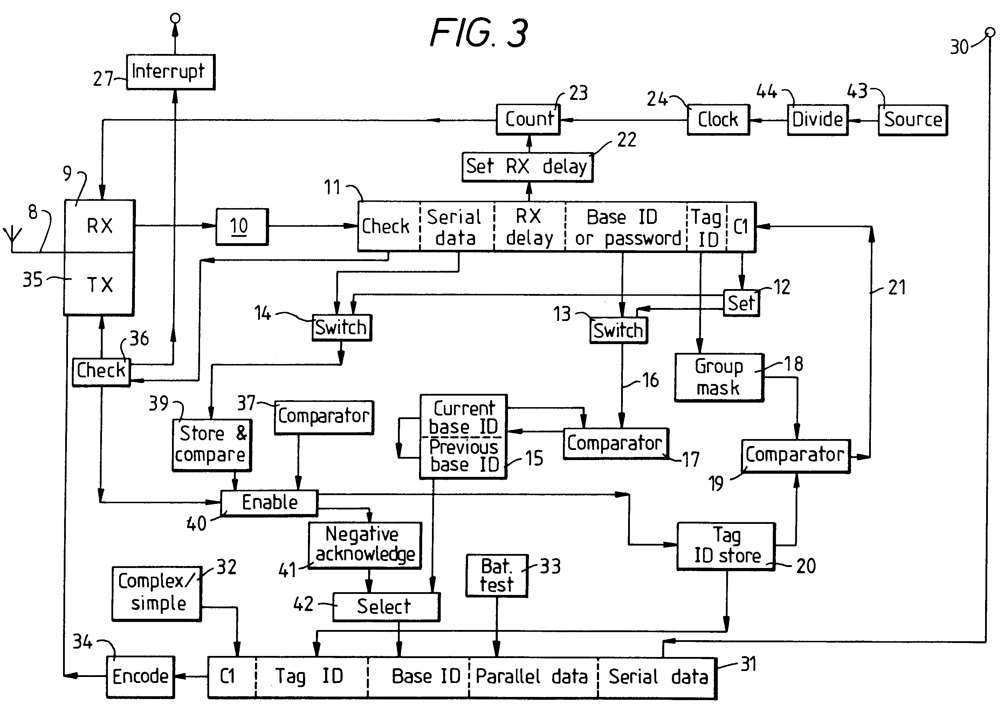

Figure 3 illustrates a tag in which the same interface chip is employed but where the micro-processor and additional memory shown in the Figure 2 embodiment are omitted. In this case, the password store 38 is omitted and the switch 13 is set so as to always transmit data from the register 11 to the two stage register 15. The comparator 37 is set so as to continuously carry an enable signal on its output line. This arrangement still permits the tag ID to be modified but lacks the additional security provided by the availability of a password.

The divider 44 is set at 1, giving a fixed rate for the exchange of data between a base station and the tag. The switch 14 is set so as to always transmit any data received in what would be the portion of the data word reserved for serial data when a micro-processor is used to the store and comparator 39.

In this embodiment, the delay between the receiver being shut down and powered up for receipt of the next message from the base station is fixed and pre-set when the tag is assembled.

In each of three variants discussed above, the interface chip is identical. It includes settings to enable it to be implemented in conjunction with a micro-processor and/or with additional memory to give increased flexibility regarding the uses for which the tag may be made suitable and the amount of data which may be processed on-board the tag.

Although it is not essential for operation of a data communication system in accordance with the invention, the base stations of the system conveniently utilise the same interface chip as is included in the tags with which the base stations are to interact. This enables the base stations to be equally flexible in the selection of suitable protocols for communication with the tags. Typically the interface chip of a base station will be arranged to provide connection to a central processing unit.

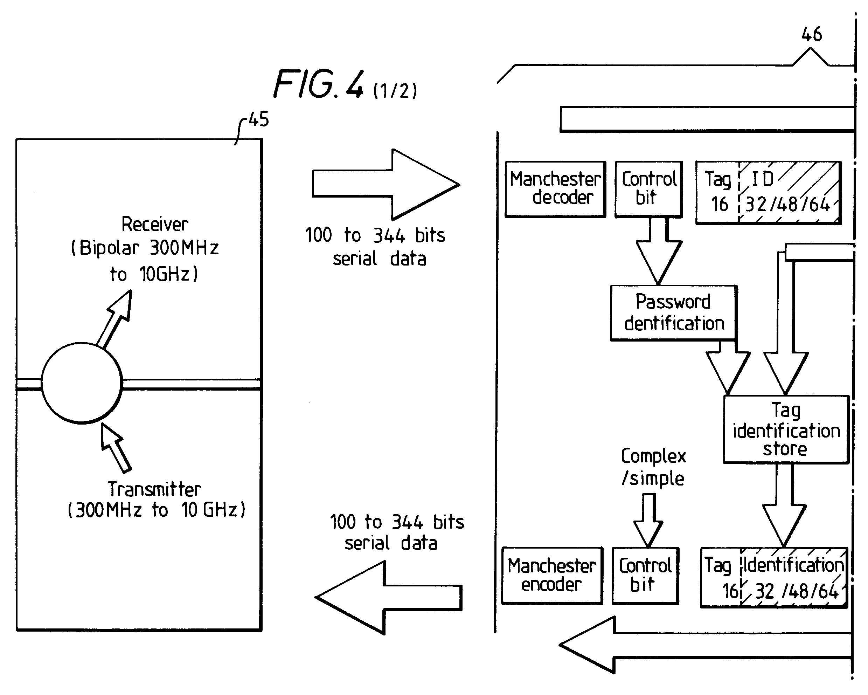

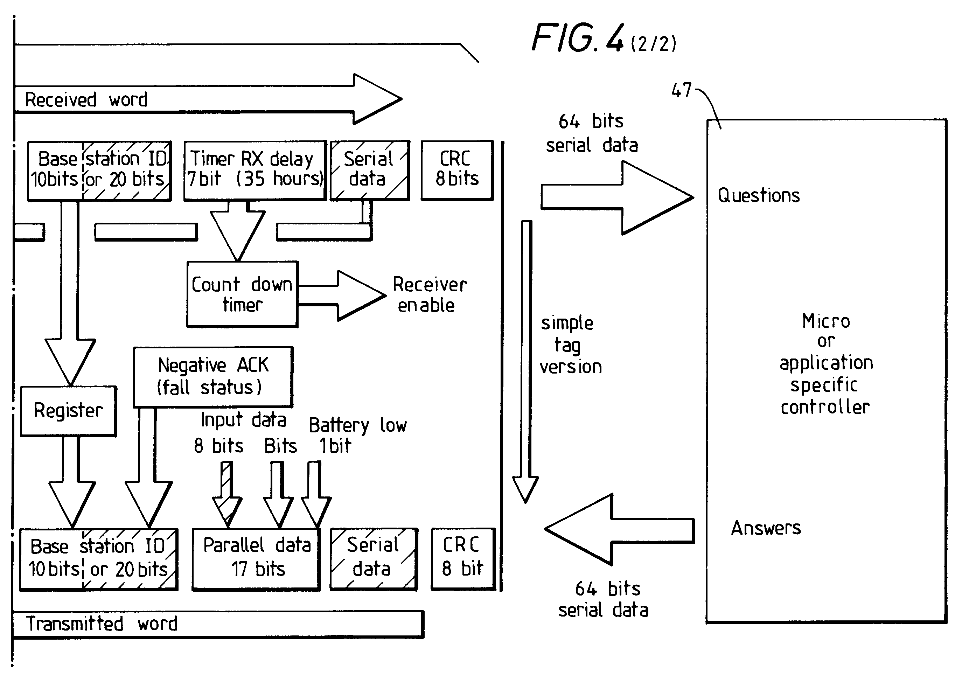

Figure 4 is a schematic diagram illustrating in functional terms another tag used in a data communication system in accordance with the invention. In this arrangement, the receiver and transmitter are shown as a single chip 45. The central section 46 represents the interface chip in combination with additional memory, the additional memory being shown as shaded. Thus, for example, when the additional memory is included, the base station ID has available 20 bits whereas when it is omitted 10 bits are available. A micro-processor 47 or ASIC may be included which communicates with the interface chip to permit the exchange of data. If the micro-processor 47 or ASIC is not included, then the interface chip acts in a simple mode and only data received in the received word or processed by the interface chip is included in the data word for transmission to a base station.

## Claims

1. A data communication system comprising a base station (1)and at least one tag (2) capable of making data available to the base station (1), the tag (2) including a data processing circuit (5)which is adjustable to enable different protocols for communication with the base station and/or data handling functions to be selected.

2. A system as claimed in claim 1 wherein the tag (2)is arranged to make data available to the base station (1) in response to an interrogation signal.

3. A system as claimed in claim 1 or 2 wherein the data processing circuit is in the form of an integrated circuit (5).

4. A system as claimed in claim 1, 2 or 3 wherein the circuit (5) is adjustable by selection means (32) set prior to the tag entering operational use.

5. A system as claimed in any preceding claim wherein the circuit (5) is adjustable by selection means set during operation of the tag.

6. A system as claimed in claim 5 wherein the selection means is set by control signals transmitted to the tag from the base station.

7. A system as claimed in any preceding claim wherein the tag includes data storage means (6) with which the data processing circuit (5) is capable of interacting.

8. A system as claimed in any preceding claim wherein the tag includes a micro-processor (7, 26) or ASIC with which the data processing circuit (5) is capable of interacting.

9. A system as claimed in any preceding claim wherein the tag includes means (20) for storing an identification code associated with it.

10. A system as claimed in claim 9 wherein the tag identification code includes a group code which is common with group codes included in identification codes of other tags in a particular group.

11. A system as claimed in claim 10 and including means (18, 19 20) permitting the base station to address the tag by its group code.

12. A system as claimed in claim 9, 10 or 11 wherein means (14, 39, 40) are included for changing the tag identification code.

13. A system as claimed in claim 12 wherein the tag identification code is changeable by a transmission from the base station.

14. A system as claimed in any preceding claim and including storage means (38) on the tag for storing a password.

15. A system as claimed in claim 14 wherein data representing the password stored on the tag must be transmitted by a base station to the tag to enable the identification code of the tag to be changed by the base station.

16. A system as claimed in any preceding claim wherein the tag includes means (15)for storing a base identification code transmitted by the base (1).

17. A system as claimed in claim 16 wherein the tag includes means (15, 17) for storing the identification code of a base station with which it is in communication and that of a previous base station with which it has communicated.

18. A system as claimed in any preceding claim and including means (22, 23) for setting a time period for which a receiver carried by the tag is made non-receptive.

19. A system as claimed in claim 18 wherein the delay for which the receiver (9)is made non-receptive is variable and is controlled by a command sent by the base station.

20. A system as claimed in any preceding claim wherein the tag includes a transmitter (35)for transmitting data to the base station.

21. A system as claimed in claim 20 including means (36)for switching the transmitter (35) into warm-up mode at a time dependent on when data has been received from the base station.

22. A system as claimed in any preceding claim wherein the tag includes means (32, 35)for transmitting information to the base station specifying whether or not the tag includes a micro-processor or ASIC.

23. A system as claimed in any preceding claim wherein the base station includes a data processing circuit substantially identical to the carried by the tag.

24. A data communication system comprising a base station and at least one tag capable of making data available to the base station, the tag including means (15) for storing information identifying the base station with which it has been in communication.

25. A system as claimed in claim 24 wherein information identifying the previous base station is transmitted by the tag to the current base station.

26. A data communication system comprising a base station and at least one tag capable of making data available to the base station, the tag including a receiver (8) and including means (22, 23)for making the receiver non-receptive for a time period after receipt of data from the base station.

27. A system as claimed in claim 26 wherein the time period is variable and is set by a command sent by the base station.

28. A system as claimed in any one of claims 24 to 27 wherein the tag is arranged to make data available to the base station in response to an interrogation signal.

29. A tag adapted for use in a system as claimed in any preceding claim.
